# EUROPEAN PATENT APPLICATION

(11) **EP 2 779 152 A1**
(43) Date of publication of application: **17.09.2014**
(21) Application number: 13185811.0
(22) Date of filing: 24.09.2013
(51) Int. Cl.: G09G 5/14, H04N 5/445

(54) **Display apparatus and control method thereof for applying motion compensation to remove artifacts from images**

(30) Priority: 12.03.2013 KR 20130025942
(71) Applicant: Samsung Electronics Co., Ltd, Gyeonggi-do 443-742 (KR)
(72) Inventor: LEE, Eun-jae, Seoul (KR)
(74) Representative: Davies, Robert Ean

(57) **Abstract**

A display apparatus and control method for removing artifacts are provided. The control method may designate the coordinates and size of a screen area of a display for a plurality of images (s21), process the images through the frame rate conversion (FRC) (s23), synchronize the images (s24), convert the frame rate of the images corresponding to the frame rate of the screen area of the display and output the images (s26). The display apparatus may include an image receiver (110); an image processor (120) which processes the plurality of images; a display (130) which displays the processed images thereon; and a controller (100) which designates coordinates of a screen area of the display for each image, controls the image processor to process the images corresponding to the designated coordinates of the screen area and to predetermined characteristics of the images and outputs the plurality of processed images to the display.

## Description

Apparatuses and methods consistent with the exemplary embodiments relate to a display apparatus and a control method thereof. More particularly, the exemplary embodiments relate to a display apparatus and a control method thereof which designates a screen area for each image and applies a motion compensation algorithm for each image in displaying several images in a single screen area, to thereby remove any artifacts.

To meet user demand and ensure user convenience, a display apparatus may display various images on a single screen. Also, a situation may arise in which advertisement and images should be simultaneously displayed in a display apparatus.

To prevent blur and judder from occurring in a high speed panel (120Hz or more), a motion compensation algorithm is used. In response to several images being divided and displayed on a single screen, the degree of motion and the image format varies by image. Thus, in response to a motion compensation technology of the related art being used, an artifact may occur.

Defective images displayed on a screen resulting from an artifact may cause a user and viewers to experience an unpleasant feeling and may impair the reliability of the product.

Accordingly, one or more exemplary embodiments may provide a display apparatus and a control method thereof which designates a screen area for each image and applies a motion compensation algorithm to each image for displaying various images on a single screen area to thereby remove any artifacts.

The foregoing and/or other aspects may be achieved by providing a display apparatus including: an image receiver configured to receive a plurality of images; an image processor configured to process the plurality of images; a display configured to display the processed images thereon; and a controller configured to designate coordinates of a screen area of the display for each image, control the image processor to process the images which correspond to the designated coordinates of the screen area and predetermined characteristics of the images and outputs the plurality of processed images to the display in response to the plurality of images with predetermined different characteristics being displayed on the screen area of the display.

The predetermined characteristics may include at least one of resolution of the images and a frame rate of the images.

The controller may designate a size of the screen area for each image according to the resolution of the plurality of images, and may process the images into the designated size of the screen area.

The display apparatus may further include a sync signal generator which generates a sync signal, the controller may output to the display the plurality of processed images according to the sync signal generated by the sync signal generator or according to a single sync signal generated by the signal generator related to the plurality of images.

The controller may convert the size of a frame of the plurality of images and may generate a single consolidated frame and may convert the frame rate of the generated consolidated frame which corresponds to the frame rate of the display and may output the image in order to arrange the image in the designated coordinates of the screen area.

The image processor may further include a frame rate conversion (FRC) to convert the frame rate of the images. The FRC may be plurally provided in order to process each of the plurality of images.

The image receiver may receive an image with at least two mixed images, and the controller may extract the images from the mixed images.

The controller may determine a boundary of the at least two images on the basis of a horizontal or vertical distribution of a particular color in the mixed images, and may extract the images according to the determined boundary.

The foregoing and/or other aspects are achieved by providing a method of controlling a display apparatus, the control method including: designating coordinates of a screen area of the display apparatus for each image; processing the image which corresponds to the designated coordinates of the screen area and predetermined characteristics; and outputting to the display apparatus the plurality of processed images and displaying all of the processed images on the screen area of the display apparatus.

The predetermined characteristics may include at least one of resolution of the images and a frame rate of the images.

The designating the coordinates may include designating a size of the screen area for each image according to the resolution of the plurality of images, and the processing the image may include processing the images into the designated size of the screen area.

The displaying may include outputting to the display apparatus the plurality of processed images according to a sync signal generated by a sync signal generator or a single sync signal related to the plurality of images generated by the sync signal generator.

The displaying may include converting a size of a frame of the plurality of images and generating a single consolidated frame in order to arrange the images in the coordinates of the screen area, and converting a frame rate of the generated consolidated frame which corresponds to a frame rate of the display apparatus and outputting the consolidated image.

The processing the image may include converting the frame rate of the plurality of images and processing the images according to a plurality of frame rate conversions (FRCs).

The receiving may include receiving an image with at least two mixed images, and the designating may include extracting the images from the mixed images.

The extracting may include determining a boundary of the at least two images based on a horizontal or vertical distribution of a particular color in the mixed images, and extracting the images according to the determined boundary.

An aspect of an exemplary embodiment may provide a display apparatus including: a controller configured to designate coordinates of a screen area of a display for each image, control the image processor to process the images which correspond to the designated coordinates of the screen area and predetermined characteristics of the images and output the plurality of processed images in response to the plurality of images with predetermined different characteristics being displayed in the screen area.

The display apparatus may further include an image receiver configured to receive a plurality of images.

The display apparatus may further include an image processor configured to process the plurality of received images.

The display apparatus may further include a display configured to display thereon the processed images, the plurality of processed images being output to the display.

The predetermined characteristics may include at least one of resolution of the images and a frame rate of the images.

The display apparatus may further include: a sync signal generator configured to generate a sync signal, wherein the controller may be configured to output the plurality of processed images to the display according to the sync signal generated by the sync signal generator or according to a single sync signal related to the plurality of images.

For a better understanding of the invention, and to show how embodiments of the same may be carried into effect, reference will now be made, by way of example, to the accompanying diagrammatic drawings in, in which:
FIG. 1 is a block diagram of a display apparatus according to an exemplary embodiment;
FIG. 2 is a block diagram of the display apparatus according to an exemplary embodiment;
FIG. 3 illustrates an example of the display apparatus processing an image according to an exemplary embodiment;
FIG. 4 illustrates an example of designating coordinates of a screen area and a size of an image by the display apparatus according to an exemplary embodiment;
FIG. 5 illustrates an example of the display apparatus synchronizing an image according to an exemplary embodiment;
FIG. 6 illustrates an example of a synchronization configuration of the display apparatus according to an exemplary embodiment;
FIG. 7 illustrates an example of the display apparatus consolidating images according to an exemplary embodiment;
FIG. 8 illustrates an example of the display apparatus processing four images and displaying the processed images on a single screen according to an exemplary embodiment;
FIG. 9 illustrates an example of the display apparatus processing four mixed images and displaying the images on a single screen according to an exemplary embodiment;
FIG. 10 illustrates an example of the display apparatus processing a single image and displaying the processed image on a single screen according to an exemplary embodiment;
FIG. 11 is a control flowchart showing the display apparatus operations according to an exemplary embodiment;
FIG. 12 is a control flowchart showing an operation of the display apparatus processing four images and displaying the processed images on a single screen according to an exemplary embodiment; and
FIG. 13 is a control flowchart showing an operation of the display apparatus processing four mixed images and displaying the processed images on a single screen according to an exemplary embodiment.

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

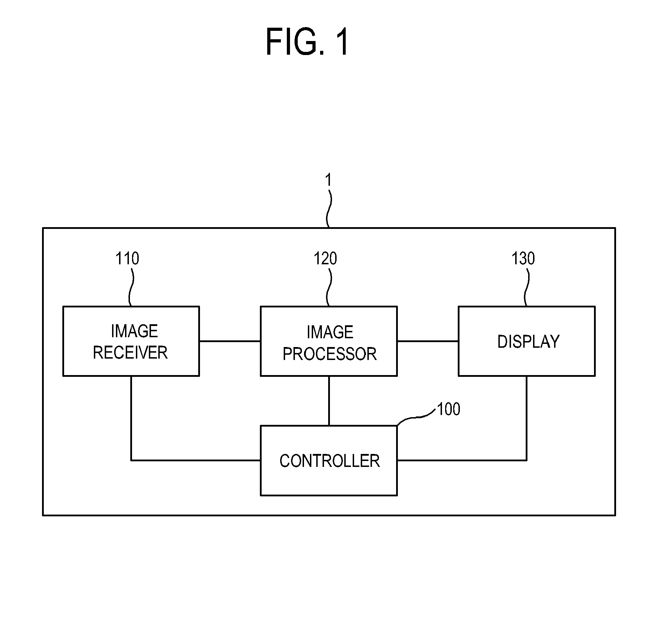

Hereinafter, a detailed configuration of a display apparatus 1 will be described with reference to FIG. 1.

FIG. 1 is a block diagram of a display apparatus 1 according to an exemplary embodiment. The display apparatus 1 according to an exemplary embodiment may be implemented as home televisions (TVs) and portable terminals.

As shown therein, the display apparatus 1 according to an exemplary embodiment may include an image receiver 110, an image processor 120, a display 130 and a controller 100.

The image receiver 110 receives image signals/image data in a wired or wireless manner and transmits the image signals/image data to the image processor 120. The image receiver 110 may vary depending on the specifications of a received image signal and the embodiment type of display apparatus 1. For example, the image receiver 110 may receive a radio frequency (RF) signal, or may receive image signals according to Composite Video, Component Video, Super Video, SCART, High Definition Multimedia Interface (HDMI), DisplayPort, Unified Display Interface (UDI) or Wireless HD standards. In response to an image signal being a broadcast signal, the image receiver 110 may include a tuner to tune the broadcast signal to a desired channel.

The image receiver 110 may receive a broadcast signal as an image signal from a broadcast signal transmission device (not shown), including a TV broadcast signal, receive an image signal from an image device such as a DVD player or BD player, receive an image signal from a personal computer (PC), receive an image signal from a portable terminal such as a smart phone or a smart pad, receive an image signal through a network such as the Internet, or may receive image contents as image signals from a storage medium such as a universal serial bus (USB). As another exemplary embodiment, the image signal may be stored in and provided by storage 170 rather than being received by the image receiver 110. A source image which is received by the image receiver 110 may be, e.g., 2K (1,920 X 1,080), 4K (3,840 X 2,160), 8K (7,680 X 4,320) or panorama 4K (7,680 X 1,080). In addition to reception of signals from an external device, the image receiver 110 may transmit information/data/signals of the display apparatus 1 to the external device. That is, the image receiver 110 is not limited to receiving signals from the external device, and may be implemented as an interface for interactive communication.

The image processor 120 processes the signal received by the image receiver 110 by performing a preset process. For example, in response to the signal received by the image receiver 110 being an image signal, the image processor 120 processes the image signal according to an image processing operation and outputs the processed image signal to the display 130, on which an image may be displayed on the basis of the processed image signal.

The image processing operation of the image processor 120 may include a demultiplexing operation for dividing a predetermined signal into plural signals, a decoding operation which corresponds to an image format of the image signal, a de-interlacing operation which converts an interlace image signal into a progressive image signal, a noise reduction operation which improves the quality of an image, a detail enhancement operation, a frame refresh rate conversion, etc. The image processor 120 may include a decoder (not shown) which decodes a source image corresponding to an image format of the encoded source image, and a frame buffer (not shown) which stores by frame the decoded source image.

The image processor 120 may be implemented as a system-on-chip (SoC) which integrates the aforementioned functions or may be implemented as an image processing board (not shown) which is formed by installing independent elements performing the aforementioned processes in a printed circuit board (PCB), and may be installed in the display apparatus 1.

The display 130 displays an image thereon based on an image signal output by the image processor 120. The display 130 may be implemented as various displays such as a liquid crystal display (LCD), a plasma display panel (PDP), a light emitting diode (LED), an organic light emitting diode (OLED), a surface-conduction electron-emitter, a carbon nano-tube, a nano-crystal, etc.

The display 130 may further include additional elements depending on its type of embodiment. For example, the display 130, as an LCD, may include an LCD panel (not shown), a backlight (not shown) emitting light to the LCD panel, and a panel driving substrate (not shown) driving the LCD panel.

The display 130 may display thereon images and color correction process. The display 130 may include a display panel in order to display an image thereon, and a panel driver (not shown) to process an input image signal and display an image on the display panel based on the processed image signal, but is not limited to this type of implementation. The image signal which is received by the image receiver 110 from an external input source may be processed, e. g., may be decoded, deinterlaced or scaled to be displayed on the display 130.

The display 130 may include an LCD, PDP or OLED but is not limited thereto. In response to the display 130 being an LCD, PDP or OLED, the display may include an LCD panel, PDP panel or an OLED panel.

The controller 100 may control overall elements of the display apparatus 1. In response to a plurality of images with predetermined different characteristics all being displayed in a screen area of the display 130, the controller 100 may designate coordinates of the screen area of the display 130 for each image, process the images which correspond to the designated coordinates of the screen area and the characteristics, and output the processed images to the display 130.

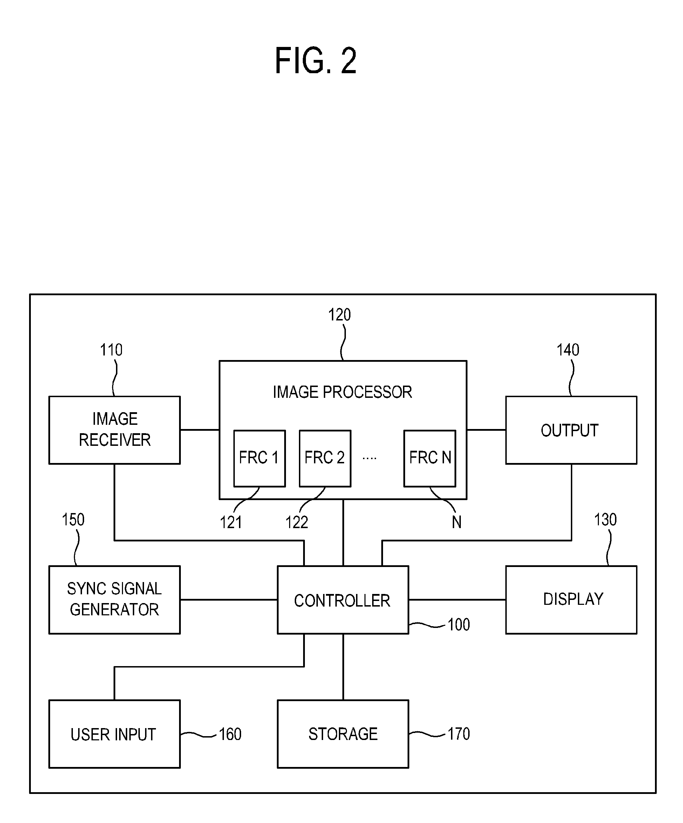

FIG. 2 is a block diagram of the display apparatus 1 according to an exemplary embodiment. As shown therein, the display apparatus 1 according to an exemplary embodiment may include the image receiver 110, the image processor 120, the display 130, and the controller 100, as in FIG. 1, and may further include a sync signal generator 150, an output 140, a user input 160 and storage 170. The display apparatus 1 in FIG. 2 may be implemented as a home TV and a portable terminal, and may also be implemented as a device which displays an image such as a navigation image.

The storage 170 may store therein unlimited data according to control by controller 100. The storage 170 may be implemented as a non-volatile memory such as a flash memory or as a hard disc drive. The storage 170 is accessed by the controller 100, which may read/record/modify/delete/update the data stored in storage 170.

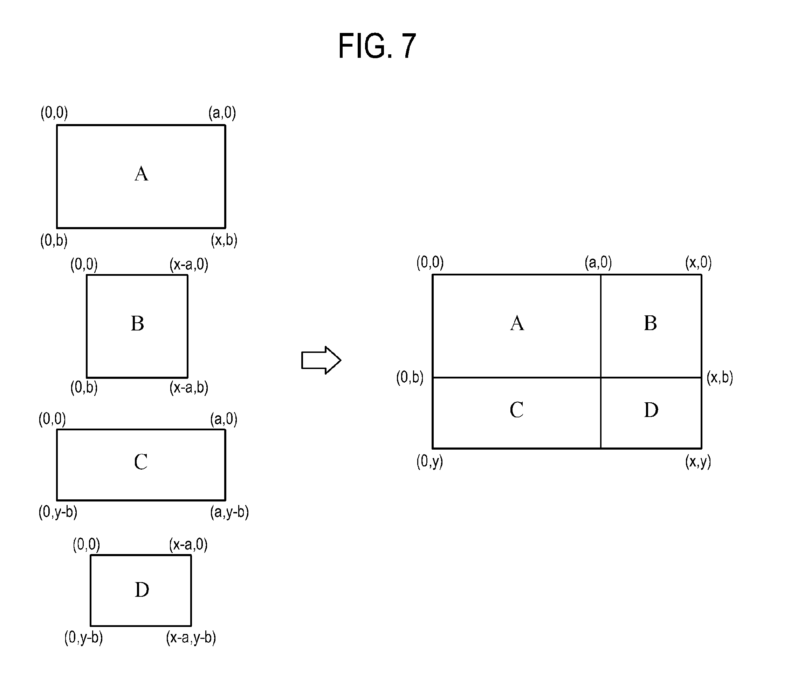

The output 140 may arrange and consolidate the processed images provided by the image processor 120 as a single frame, into a designated size and in designated coordinates, convert a frame rate of the images which correspond to a frame rate of the display 130 and may output the images to the display 130. For example, in response to the frame rate of the images processed by the image processor 120 being 60Hz, the output 140 may convert the frame rate of the images into 120Hz, which is the frame rate of the display 130, and may output the images to the display 130. FIG. 7 illustrates an example of the display apparatus consolidating images 1 according to an exemplary embodiment. The output 140 may be implemented through frame rate conversion (FRC).

The user input 160 is manipulated by a user and may generate and transmit a preset control command to the controller 100. For example, the user input 160 may be implemented as an input key pad (not shown) installed in a frame (not shown) or as a touch screen (not shown) on display 130.

Otherwise, the user input 160 may be implemented as a remote controller which is separated from a navigation device or may be separated as an external device (not shown) such as a mobile phone. In this case, the user input 160 may communicate with the image receiver 110 and transmit a control command to the controller 100.

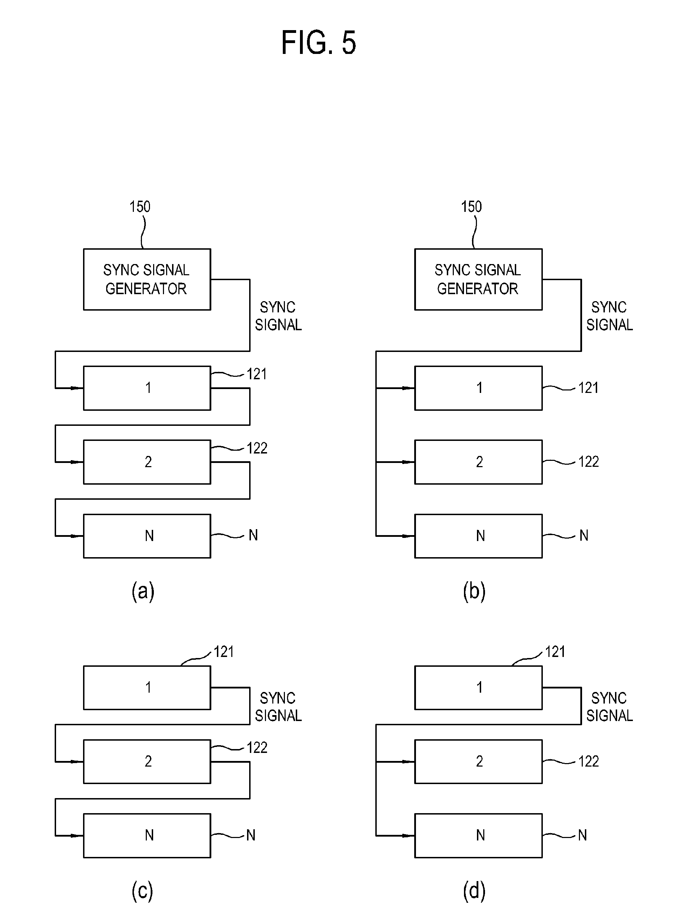

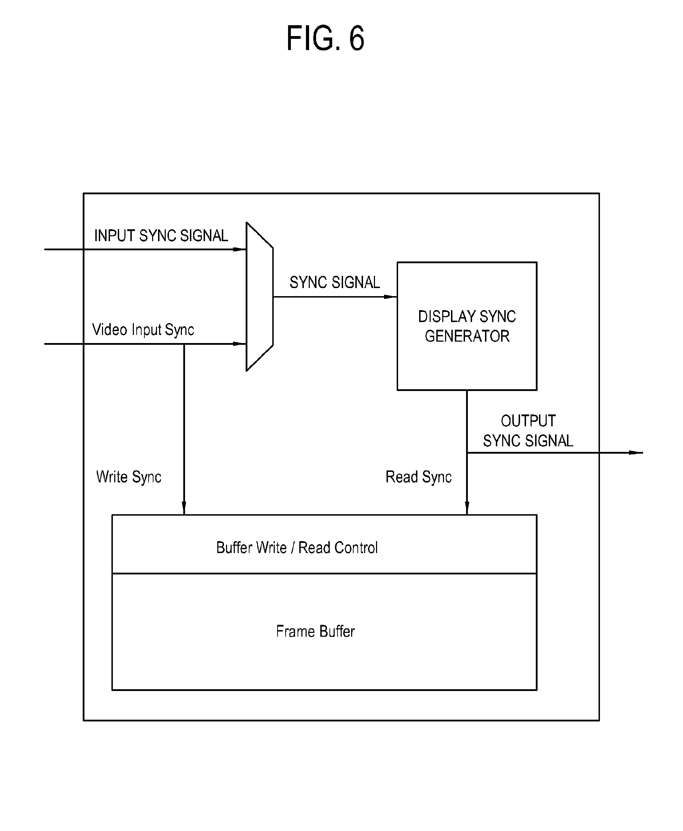

The sync signal generator 150 may generate a sync signal in order to synchronize the frame rates of images. The sync signal generator 150 may generate a reference signal in order to convert images with difference frame rates into the images with the same frame rate and may synchronize images. Generation of the sync signal may be performed by the separate sync signal generator 150 as in FIGS. 5 and 6, or by one of the FRCs (121 to N) of the image processor 120. The sync signal generator 150 may generate a read sync of the frame buffer in sync with the sync signal, operate the frame buffer through the generated signal and transmit the signal to the output 140. The image processor 120 may transmit area size information provided by the image receiver 110, to the output 140 in addition to the synchronized signal.

The image processor 120 may include an FRC which converts the frame rate of an image to process the image. The FRCs 121 to N may be plurally provided in order to process a plurality of images.

The controller 100 may output the plurality of processed images to the display 130 according to the sync signal generated by the sync signal generator 150 or a single sync signal out of a plurality of images. The controller 100 may also convert the size of a frame of the plurality of images and generate a single consolidated frame to arrange the images in the designated coordinates of the screen area and may convert the frame rate of the generated consolidated frame corresponding to the frame rate of the display 130 and output the converted frame. Upon receiving an image including at least two mixed images, the controller 100 may extract the images from the mixed images. Based on a horizontal or vertical distribution of a particular color in the mixed images, the controller 100 may determine a boundary of the at least two images and may extract an image according to the determined boundary.

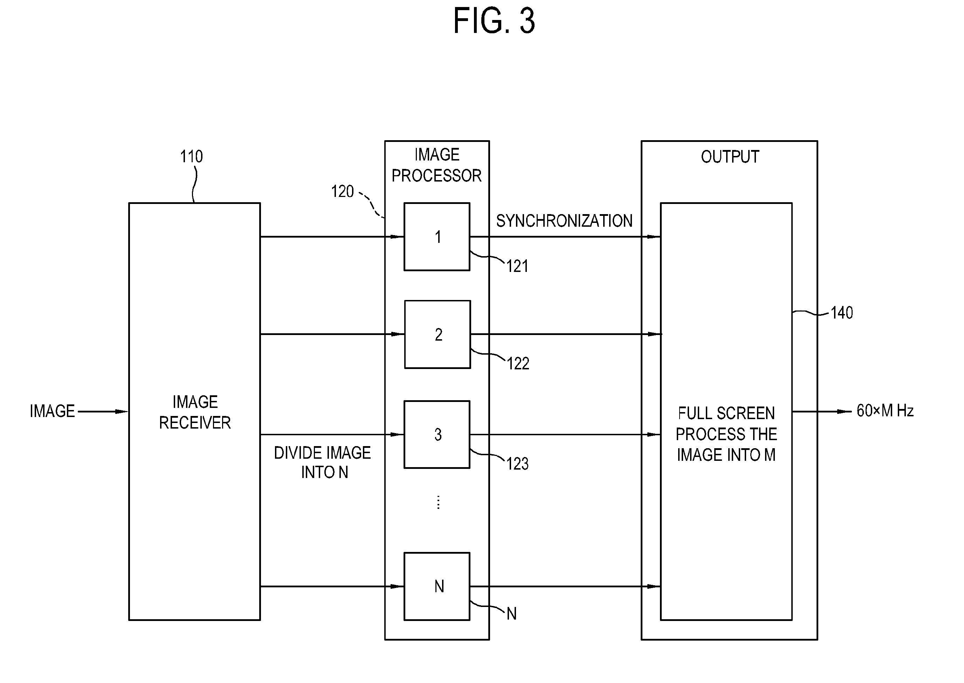

As shown in FIG. 3, there may be FRCs 121 to N which receive several images from the image receiver 110 and process each image. Accordingly, the images may be processed without affecting other images.

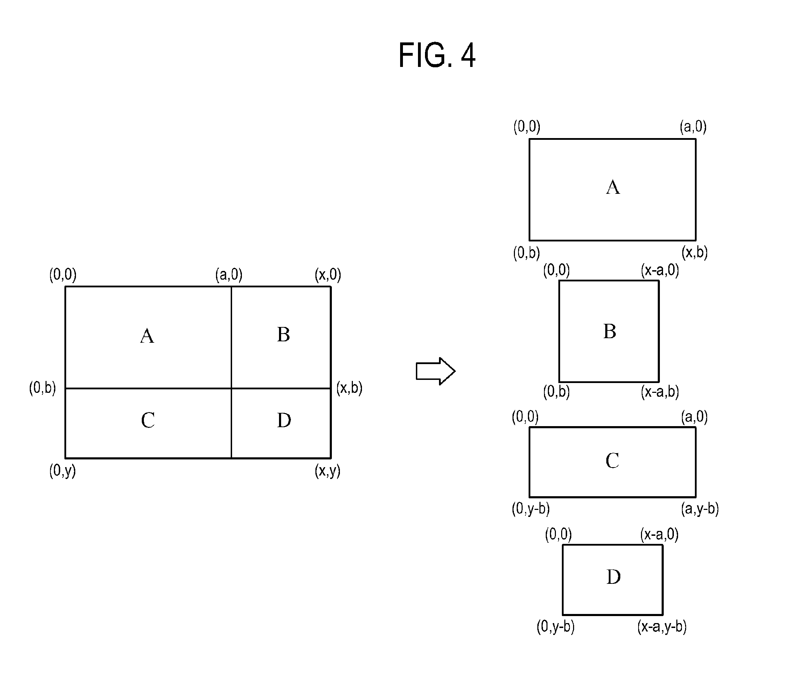

FIG. 4 illustrates an example of the display apparatus 1 designating the coordinates of the screen area and the size of images 1 according to an exemplary embodiment. Different images have different sizes and different frame rates. As an example, in response to four images with predetermined different characteristics being displayed on a screen area of the display 130, such characteristics may include at least one of resolution of the images and a frame rate of the images. FIG. 4 illustrates the screen area of the display 130, coordinates of which may be designated for each image. Also, the size of the screen area may be designated for four respective images, depending on the resolutions of the four images.

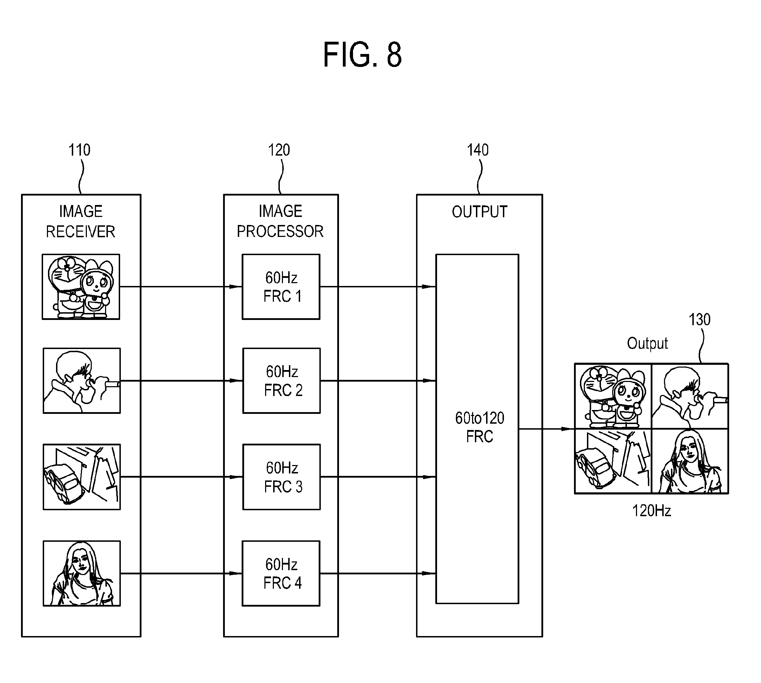

FIG. 8 illustrates an example of the display apparatus processing four images and displaying the four processed images on a single screen 1 according to an exemplary embodiment. The process of displaying the four images in the screen area of the display 130 may be described with reference to FIG. 8.

Four images with predetermined different characteristics will be displayed on the display 130. The image receiver 110 designates coordinates and size of the screen area of the display 130 for the four images with predetermined different characteristics and transmits the four images to the image processor 120. The image processor 120 includes four FRCs 121 to N, and processes the four images with predetermined different characteristics into the size of the designated screen area. This is done by using the coordinates and size information of the screen area and size information extracted from the divided image information. The image processor 120 analyzes the characteristics of the images, determines whether the images are video images which may have a frame rate of 60Hz or film images which may have a frame rate of 24Hz, and processes the images according to this determination.

The sync signal is generated by the sync signal generator 150 or on the basis of an output by one of the FRCs 121 to N of the image processor 120. The read sync of the frame buffer is generated in synchronism with the sync signal. The generated signal is used to operate the frame buffer and the signal is transmitted to the output 140. In addition to the synchronized signal, the area size information which is provided by the image receiver 110 is transmitted to the output 140. Then, the synchronized, i.e., four 60Hz images are transmitted to the output 140, and are arranged and consolidated as a single frame, into the designated size and in the designated coordinates. The frame rate of the images is converted into 60Hz corresponding to 120Hz, the frame rate of the display 130 and the images are output to the display 130. Then, all four of the images with predetermined different characteristics may be displayed on the display 130. An example of four images has been explained above, but the number of images is not limited to four images, and may vary.

A related art method of displaying several images on a single screen is to synchronize the frame rate of several images as a single frame or to consolidate the several images and process the frame of the image and output the image on the display 130, without synchronization. This method affects the images in other areas and causes artifacts occur. However, in an exemplary embodiment, the coordinates and size of the screen area of the display 130 are designated for the four images, and the FRCs 121 to N process and synchronize the images, convert the frame rate of the four images which correspond to the frame rate of the screen area of the display 130 and output the four images to the display 130 to thereby prevent any artifacts.

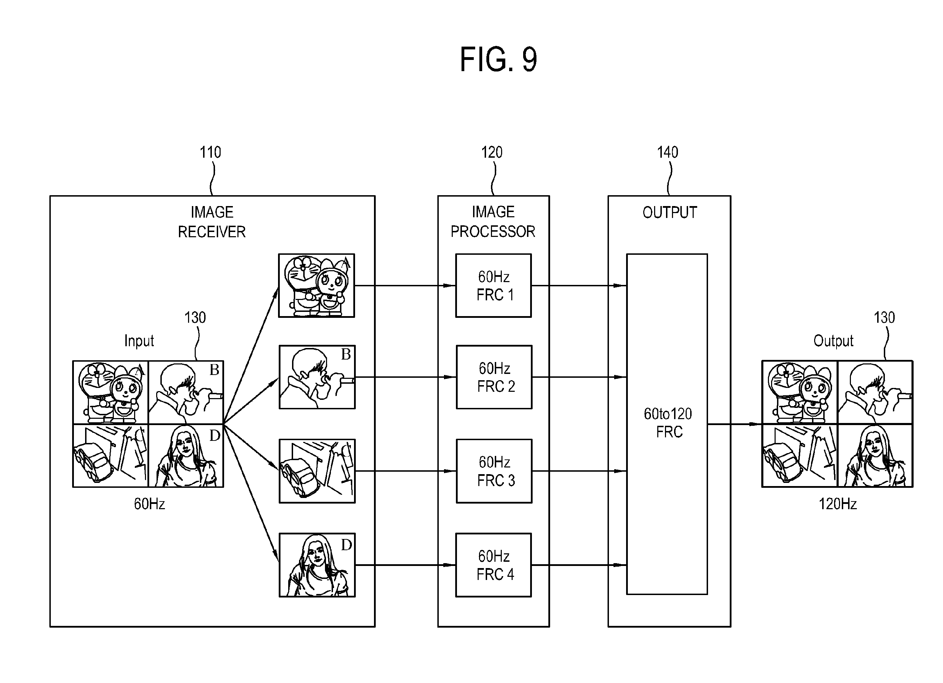

FIG. 9 illustrates an example of the display apparatus 1 processing four mixed images and displaying the images in a single screen 1 according to an exemplary embodiment. With reference to FIG. 9, the process of processing a single mixed image including four images with different predetermined characteristics and of displaying the image in a single screen will be described.

In response to a single mixed image including four images with predetermined different characteristics being received by image receiver 110, the controller 100 determines the boundary of the four images on the basis of horizontal or vertical distribution of a particular color in the mixed images, and controls the image receiver 110 to extract the four images according to the determined boundary. The four extracted images are then transmitted to the image processor 120. Subsequent processes are the same as those in FIG. 8, and the four images are displayed on the display 130.

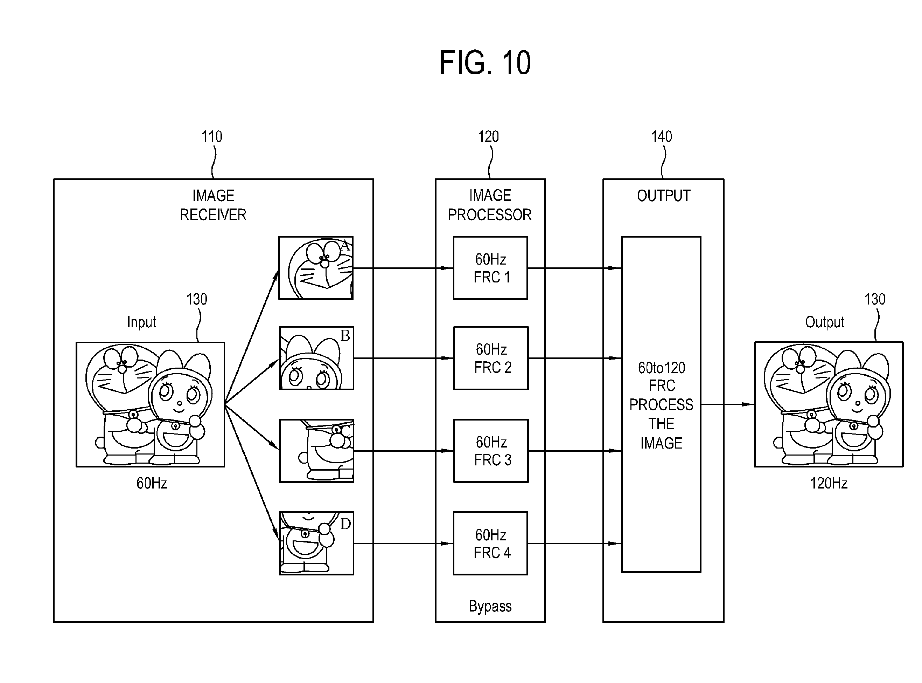

FIG. 10 illustrates an example of the display apparatus 1 processing a single image and displaying the image according to an exemplary embodiment. FIG. 10 relates to the case where the single image is not a single mixed image including a plurality of images with predetermined different characteristics.

In response to a single image which is not the single mixed image including a plurality of images with predetermined different characteristics being received by the image receiver 110, the image processor 120 only synchronizes the four images, processes only one frame and outputs the image to the output 140. The output 140 then converts to 60Hz, which the frame rate of the image output by the image processor 120, into 120Hz, which is the frame rate of the screen area of the display 130, and outputs the image to the display 130.

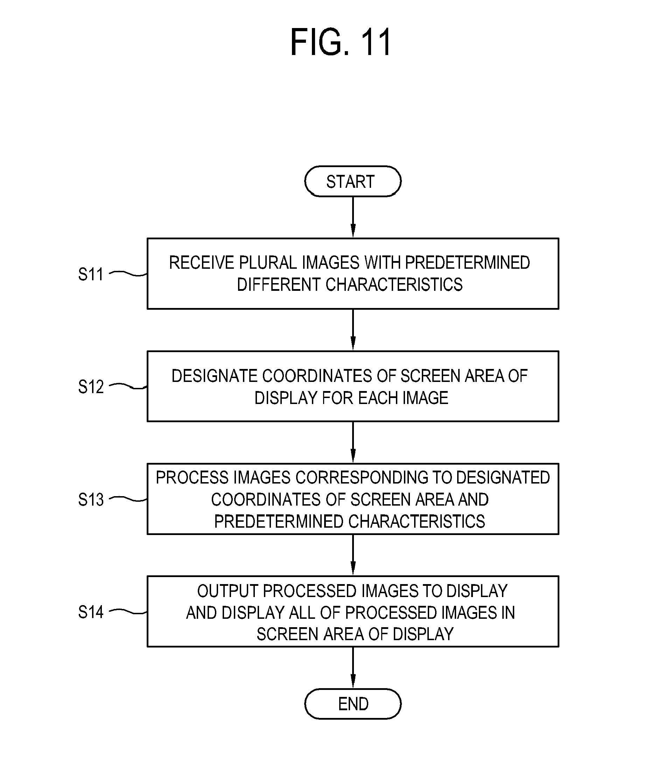

FIG. 11 is a control flowchart showing operations of the display apparatus 1 according to an exemplary embodiment. As shown therein, the operations of the display apparatus 1 according to an exemplary embodiment will be described in detail.

The image receiver 110 receives a plurality of images with different predetermined characteristics (S11). The predetermined characteristics may include at least one of resolution of the images and frame rate of the images. Coordinates of the screen area of the display 130 are designated for each image (S12). The coordinates of the respective images may be set on the basis of the size of the respective images or may be set by a user at his/her own discretion. The image is processed in a manner corresponding to the designated coordinates of the screen area and the predetermined characteristics (S13). The respective images may be images with different frame rates, and may be processed, i.e., decoded so as to correspond to the frame rates. Since the respective images may have different frame rates, the frame rates may be converted and synchronized to make the frame rates uniform. The plurality of processed images is output to the display 130 and displayed in the screen area of the display 130 (S14). The frame rate of the plurality of images processed by the image processor 120 may be converted in a manner corresponding to the frame rate of the display 130 and may be output.

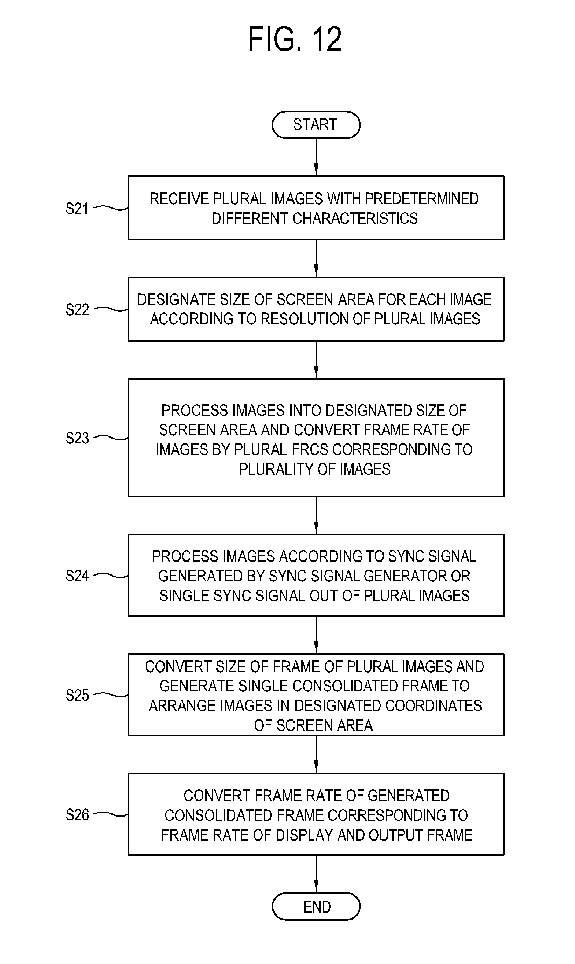

FIG. 12 is a control flowchart showing an operation of the display apparatus 1 processing four images and displaying the four images on a single screen according to an exemplary embodiment. As shown therein, the operation of processing four images and displaying the processed images in a single screen by the display apparatus 1 according to an exemplary embodiment will be described.

The image receiver 110 receives a plurality of images with predetermined different characteristics (S21 The predetermined characteristics may include at least one of resolution of the images and the frame rate of the images. The size of the screen area for each image is designated according to the resolution of the plurality of images (S22). The coordinates of the respective images may be set on the basis of the size of the respective images or may be set by a user at his/her own discretion. The images are processed into the designated size of the screen area, and the frame rate of the images is converted by the plurality of FRCs (S23). The respective images may be images with different frame rates, and may be processed, i.e., decoded in a manner corresponding to the frame rates. The images are processed according to the sync signal generated by the sync signal generator 150 or by a single sync signal, related to the plurality of images (S24). Since the respective images may have different frame rates, the frame rates may be converted and synchronized to make the frame rates uniform. To arrange the images in the designated coordinates of the screen area, the size of the frame of the plurality of images may be converted in order to generate a single consolidated frame (S25). The frame rate of the generated consolidated frame is converted in a manner corresponding to the frame rate of the display 130 and the frame is then output (S26).

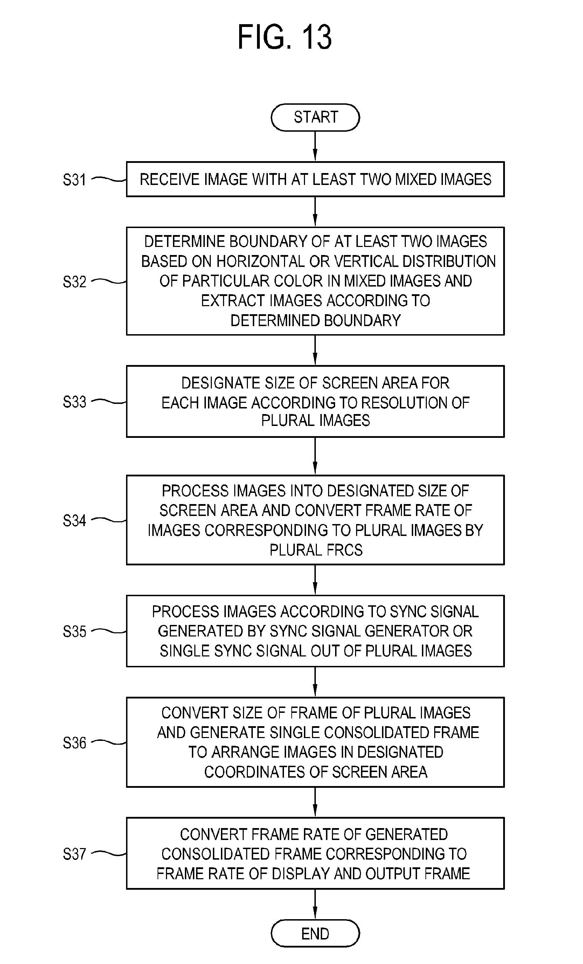

FIG. 13 is a control flowchart showing an operation of the display apparatus 1 processing four mixed images and displaying the images in a single screen according to an exemplary embodiment. As shown therein, the operation of by the display apparatus 1 processing the four mixed images and displaying the images in a single screen will be described.

The image receiver 110 receives a single mixed image including at least two images with predetermined different characteristics (S31). The predetermined characteristics may include at least one of resolution of the image and frame rate of the image. The controller 100 determines the boundary of the at least two images based on the horizontal or vertical distribution of a particular color in the mixed image, and extracts the images according to the determined boundary (S32). The extracted images and information related to the coordinates of the extracted images and the size of the images are transmitted to the image processor 120. The size of the screen area is designated for each image according to the resolution of the plurality of images (S33). The coordinates of the respective images may be set on the basis of the size of the respective images or may be set by a user at his/her own discretion. The image may be processed into the designated size of the screen area, and the frame rate of the images may be converted by the plurality of FRCs (S34). The respective images may be images with different frame rates, and may be processed, i.e., decoded in a manner corresponding to the frame rates. The images are then processed according to the sync signal generated by the sync signal generator 150 or according to a single sync signal related to the plurality of images (S35). Since the respective images may have different frame rates, the frame rates may be converted and synchronized in order to make the frame rates uniform. To arrange the images in the designated coordinates of the screen area, the size of the frame of the plurality of images is converted to generate a single consolidated frame (S36). The frame rate of the generated consolidated frame may be converted in a manner corresponding to the frame rate of the display 130 and the frame is then output (S37).

The display apparatus 1 according to an exemplary embodiment may designate the coordinates and size of the screen area of the display 130 for the plurality of images, process the images through the FRCs 121 to N, synchronize the images, convert the frame rate of the images which correspond to the frame rate of the screen area of the display 130, and output the images to the display 130. Thus, artifact may be prevented from occurring and a user may comfortably view several images on a single screen.

As described above, a display apparatus and a control method according to an exemplary embodiment may designate a screen area for each image and may apply a motion compensation algorithm in displaying several images in a single screen to thereby remove artifacts. Thus, a user may comfortably view images and have more trust in the products.

Although a few exemplary embodiments have been shown and described, it will be appreciated by those skilled in the art that changes may be made in these exemplary embodiments without departing from the principles and spirit of the invention, the range of which is defined in the appended claims and their equivalents.

## Claims

1. A display apparatus comprising:
an image receiver (110) configured to receive a plurality of images;
an image processor (120) configured to process the plurality of received images;
a display (130) configured to display thereon the processed images; and
a controller (140) configured to designate coordinates of a screen area of the display for each image, control the image processor to process the images which correspond to the designated coordinates of the screen area and predetermined characteristics of the images and output the plurality of processed images to the display in response to the plurality of images with predetermined different characteristics being displayed in the screen area of the display.

2. The display apparatus according to claim 1, wherein the predetermined characteristics comprise at least one of resolution of the images and a frame rate of the images.

3. The display apparatus according to claim 1 or 2, wherein the controller is configured to designate a size of the screen area for each image according to the resolution of the plurality of images, and process the images into the designated size of the screen area.

4. The display apparatus according to any preceding claim, further comprising:
a sync signal generator (150) configured to generate a sync signal, wherein
the controller is configured to output the plurality of processed images to the display according to the sync signal generated by the sync signal generator or according to a single sync signal related to the plurality of images.

5. The display apparatus according to any preceding claim, wherein the controller is configured to convert the size of a frame of the plurality of images and generate a single consolidated frame and convert the frame rate of the generated consolidated frame which corresponds to the frame rate of the display and output the image to arrange the image in the designated coordinates of the screen area.

6. The display apparatus according to any preceding claim, wherein the image processor further comprises a frame rate converter (121) configured to convert the frame rate of the images, and a plurality of frame rate converters are provided to process each of the plurality of images.

7. The display apparatus according to any preceding claim, wherein the image receiver is configured to receive an image with at least two mixed images, and the controller is configured to extract the image from the mixed images.

8. The display apparatus according to claim 7, wherein the controller is configured to determine a boundary of the at least two images on the basis of a horizontal or vertical distribution of a particular color in the mixed images, and to extract the images according to the determined boundary.

9. A method of controlling a display apparatus, the control method comprising:
designating (S12) coordinates of a screen area of the display apparatus for each image;
processing (S13) an image which corresponds to the designated coordinates of the screen area and predetermined characteristics; and
outputting (S14) to the display apparatus the plurality of processed images and displaying all of the processed images on the screen area of the display apparatus.

10. The control method according to claim 9, wherein the predetermined characteristics comprise at least one of resolution of the images and a frame rate of the images.

11. The control method according to claim 9 or 10, wherein designating the coordinates comprises designating (S22) a size of the screen area for each image according to the resolution of the plurality of images, and processing (S23) the image comprises processing the images into the designated size of the screen area.

12. The control method according to any of claims 9-11, wherein the displaying comprises outputting to the display apparatus the plurality of processed images according to a sync signal generated by a sync signal generator or a single sync signal related to the plurality of images.

13. The control method according to any of claims 9-12, wherein the displaying comprises converting (S25) a size of a frame of the plurality of images and generating a single consolidated frame in order to arrange the images in the coordinates of the screen area, and converting (S26) a frame rate of the generated consolidated frame which corresponds to a frame rate of the display apparatus and outputting the consolidated image.

14. The control method according to any of claims 9-13, wherein the processing (S34) the image comprises converting the frame rate of the plurality of images and processing the images through a plurality of frame rate conversions (FRCs).

15. The control method according to any of claims 9-14, wherein the receiving comprises receiving (S31) an image with at least two mixed images, and the designating comprises extracting the images from the mixed images.
